# EUROPÄISCHE PATENTSCHRIFT

(11) **EP 3 354 975 B1**
(45) Veröffentlichungstag und Bekanntmachung des Hinweises auf die Patenterteilung: **28.09.2022**
(21) Anmeldenummer: 18152971.0
(22) Anmeldetag: 23.01.2018
(51) Int. Cl.: F21V 7/00, F21V 7/04, F21V 13/02, G02B 19/00, F21Y 115/10, F21Y 105/10, G02B 5/00, G02B 5/02

(54) **LEUCHTE UND (VOR-)OPTIK FÜR LEUCHTE**
LUMINAIRE AND (ATTACHMENT-)OPTICS FOR A LUMINAIRE
LUMINAIRE ET OPTIQUE POUR UN LUMINAIRE

(30) Priorität: 30.01.2017 DE 202017100470 U
(43) Veröffentlichungstag der Anmeldung: 01.08.2018
(73) Patentinhaber: Zumtobel Lighting GmbH, 6850 Dornbirn (AT)
(72) Erfinder: Machate, Andreas, 88239 Wangen im Allgäu (DE)
(74) Vertreter: Kiwit, Benedikt

(56) Entgegenhaltungen:
- EP-A1- 1 496 488
- WO-A1-2007/036185
- WO-A1-2010/051226
- CA-A1- 2 638 627
- JP-A- 2004 311 353
- KR-A- 20130 022 899
- KR-B1- 101 122 722
- TW-U- 200 707 005
- US-A1- 2011 292 655
- US-A1- 2015 159 834

## Beschreibung

Die vorliegende Erfindung betrifft eine Leuchte mit einer flächigen Leiterplatte und darauf angeordneten Leuchtmitteln sowie in Hauptabstrahlrichtung der Leuchtmittel nachgeordneten Optiken zur homogenen Mischung und Streuung des von den Leuchtmitteln abgegebenen Lichts.

Aus dem Stand der Technik sind grundsätzlich vergleichbare Leuchten bekannt, die auch als Backlit-Leuchtenanordnung bezeichnet werden. Backlit hinterleuchtete Optiken werden mittels eines - als Mischstrecke dienendem - Abstand von den Leuchtmitteln hin zu einer Diffusorfolie beabstandet gehalten, um eine möglichst gute Durchmischung des Lichts und schließlich eine homogene Lichtabgabe zu erzielen. Bei Backlit-Leuchtenanordnungen in niedriger Bauform ist jedoch häufig das Problem, dass das abgestrahlte Licht der Punktlichtquellen (zumeist LEDs) kreisförmig auf der in Abstrahlrichtung nachgeordneten Diffusorfolie und damit als Fehler der Leuchte erscheint, da nicht genügend Abstand von dem Leuchtmittel zur Diffusorfolie hin gegeben ist.

Eine Möglichkeit, die Ausleuchtung bei einem derart geringen Abstand zwischen Leuchtmittel und Diffusorfolie homogen zu gestalten und damit die Gesamthöhe der Leuchte möglichst gering zu halten, ist es, den Pitch - also den Abstand der Punktlichtquellen zueinander - gering zu halten; mithin also die Anzahl der Punktlichtquellen zu erhöhen. Weitere Möglichkeiten liegen im Einsatz von linsenund lichtleiterartigen Voroptiken zur Aufweitung des von den Leuchtmitteln abgestrahlten Lichts. Darüber hinaus besteht auch die Möglichkeit in einer Erhöhung der Diffusität der Streu- bzw. Diffusorfolie.

Zur Vermeidung von vorbeschriebenen Fehlern auf der Diffusorfolie muss somit entweder die Leuchtenhöhe vergrößert oder die Anzahl der Lichtquellen und/oder Optiken und somit die Anzahl der Bauteile gesteigert werden, was insgesamt wiederum zu hohen Kosten und zu einem schlechten Wirkungsgrad der Leuchte führt.

KR 2013 0022899 A offenbart eine flache Beleuchtungsvorrichtung, welche eine Diffusionsplatte, ein Substrat, mehrere Leuchtmittel sowie ein Gehäuse aufweist. Das Substrat weist dabei erste Reflexionsteile auf, welche jeweils einem Leuchtmittel zugeordnet sind und welche dieses Leuchtmittel umgeben. Die ersten Reflexionsteile sind dazu vorgesehen, das von einem Leuchtmittel ausgesandte Licht in Richtung des Substrats zu reflektieren.

KR101122722B offenbart eine Leuchte aufweisend: eine flächige Leiterplatte mit auf wenigstens einer ihrer flächigen Seiten angeordneten Leuchtmitteln, ein vor der Leiterplatte angeordnetes flächiges Optikelement, und je Leuchtmittel ein in Hauptabstrahlrichtung vor dem Leuchtmittel und zwischen der Leiterplatte und dem Optikelement angeordnetes Abschattungselement zum wenigstens teilweise Abschatten des Lichtes des zugeordneten Leuchtmittels; wobei die Abschattungselemente jeweils mit zwei Stege mit der Leiterplatte verbunden sind.

EP 1 496 488 A1 offenbart eine Beleuchtungsvorrichtung, aufweisend eine Diffusionsplatte, ein Gehäuse, einen Reflektor mit geneigten Flächen sowie ein Leuchtmittel. Dem Leuchtmittel ist ein Lichtkontrollelement mit einem runden Plattenabschnitt und einem Halteabschnitt, mittels dem das Lichtkontrollelement an dem Leuchtmittel befestigt ist, zugeordnet. Der runde Plattenabschnitt weist eine Reflexionszone und eine Transmissionszone auf, mittels denen das von dem Leuchtmittel abgegebene Licht umgelenkt bzw. gestreut wird.

CA 2 638 627 A1 offenbart eine Beleuchtungsvorrichtung mit einem Reflektor, einem Leuchtmittel und einer Hitzeabführung. Dem Leuchtmittel ist dabei eine beschichtete ringförmige Linse zugeordnet, mit der das von dem Leuchtmittel seitlich abgestrahlte Licht auf den Reflektor und von dort auf ein Abdeckelement gelenkt wird.

US 2011 0 292 655 A1 offenbart ein Lichtpanel, in welchem eine Diffusorplatte Vorsprünge aufweist, die Lichtquellen zugeordnet sind. Die Lichtquellen befinden sich auf einer Leiterplatte und weisen jeweils Reflektoren auf, auf welchen die Diffusorplatte aufliegt.

TW 200 707 005 A offenbart ein Backlight Modul, in welchem eine transparente Platte konkave Strukturen aufweisen kann, deren jeweilige Positionen denen zugeordneter Lichtquellen entsprechen kann. Die konkaven Strukturen können einen optischen Film aufweisen. Die konkaven Strukturen sind integral mit der transparenten Platte ausgebildet und können auf den Lichtquellen aufliegen.

Es ist somit eine Aufgabe der vorliegenden Erfindung, eine Leuchte bereitzustellen, bei der auch bei einer Backlitanordnung eine geringe Leuchtenhöhe erzielt werden kann.

Diese und weitere Aufgaben werden durch den Gegenstand der unabhängigen Ansprüche gelöst. Die abhängigen Ansprüche bilden den zentralen Gedanken der Erfindung in besonders vorteilhafter Weise weiter.

Gemäß einem ersten Aspekt betrifft die vorliegende Erfindung eine Leuchte mit einer flächigen Leiterplatte mit auf wenigstens einer ihrer flächigen Seiten angeordneten Leuchtmitteln mit Hauptabstrahlrichtung. Die "Hauptabstrahlrichtung" beschreibt im Rahmen der Erfindung dabei insbesondere die Abstrahlrichtung des Leuchtmittels mit höchster Leuchtdichte. Diese Richtung erstreckt sich bspw. bei LEDs in der Regel senkrecht auf dem LED-Chip. In Hauptabstrahlrichtung ist vor der Leiterplatte ein flächiges Optikelement (bspw. in Form einer Optikplatte) zur optischen Beeinflussung des von den Leuchtmitteln abgegebenen Lichts angeordnet. Unter "flächig" wird im Rahmen der Erfindung insbesondere eine großflächige Erstreckung bei vergleichsweise geringer Höhe und bevorzugt eine flächenmäßige Erstreckung insbesondere in einer Ebene verstanden. Je Leuchtmittel ist ein in Hauptabstrahlrichtung (direkt) vor dem Leuchtmittel und zwischen der Leiterplatte und dem Optikelement angeordnetes Abschattungselement zum wenigstens teilweise Abschatten des Lichtes des zugeordneten Leuchtmittels in Hauptabstrahlrichtung vorgesehen. Dies bedeutet, dass eine Vielzahl an Abschattungselementen vorgesehen ist, die bevorzugt jeweils einzeln einem Leuchtmittel entsprechend zugeordnet sind.

Mittels des direkt den einzelnen Leuchtmittel zugeordneten Abschattungselements kann es insbesondere in einem Bereich der höchsten Leuchtdichte eines jeden Leuchtmittels erreicht werden, dass das Licht des Leuchtmittels nicht unmittelbar auf das danach angeordnete Optikelement trifft, sodass insgesamt eine homogenere Lichtverteilung erzielt wird und auch bei niedriger Bauform das von den einzelnen Leuchtmitteln abgestrahlte Licht nicht kreisförmig auf dem Optikelement erscheint. Da das Abschattungselement nur (direkt) vor den Leuchtmitteln vorgesehen ist, wird der Großteil des von ihnen abgegebenen Lichtes nicht beeinflusst, bevor er auf das Optikelement trifft und muss daher keinen Materialdurchgang oder ähnliches überwinden. Somit ist auch der Wirkungsgrad der vorliegenden Leuchte vergleichsweise hoch. Da zudem das Abschattungselement vor einem jeden Leuchtmittel vorgesehen ist, kann dieses ferner als Berührschutz dienen. Da zudem keine separaten Optiken mit hoher Oberflächengüte und Materialanhäufung erforderlich sind, kann auf eine insgesamt flache Bauweise unter Verwendung eines vergleichsweise kostengünstigen Bauteils abgezielt werden.

In einer bevorzugten Ausgestaltungsform weist das Abschattungselement eine Reflektoroptik auf bzw. ist als Reflektor ausgebildet. Diese(r) ist derart ausgebildet und angeordnet, um das in Hauptabstrahlrichtung abgegebene Licht des zugeordneten Leuchtmittels wenigstens teilweise auf die Leiterplatte zurück umzulenken. Somit wird nicht nur verhindert, dass sich das abgestrahlte Licht der Punktlichtquelle kreisförmig auf dem Optikelement abbildet, indem der kreisbilderzeugende Teil des Lichts abgeschattet wird. Vielmehr wird dieser Teil des Lichts bevorzugt ferner derart umgelenkt, um auch zur Lichtabgabe wirksam bereitgestellt zu werden. Somit kann eine besonders homogene Lichtverteilung bei gleichzeitig hohem Wirkungsgrad der Leuchte erzielt werden.

Die den Abschattungselementen oder dem Optikelement zugewandte oder die die Leuchtmittel aufweisende flächige Seite der Leiterplatte ist bevorzugt reflektierend ausgebildet, um insbesondere einen von dem Abschattungselement zurückgeworfenen Lichtanteil entsprechend zu reflektieren und auf das Optikelement umzulenken, um somit den Wirkungsgrad der Leuchte insgesamt weiter zu erhöhen.

Die die Leuchtmittel aufweisende flächige Seite kann mit einer reflektierenden Beschichtung versehen sein, um von den Leuchtmitteln stammendes und bevorzugt von den Abschattungselementen umgelenktes Licht in Richtung des Optikelements umzulenken. Diese Beschichtung lässt sich beliebig auftragen und kann somit auf die gegenebene Anforderungen hin definiert eingestellt werden.

Alternativ oder zusätzlich kann auf der die Leuchtmittel aufweisenden flächigen Seite der Leiterplatte eine flächige reflektive Platte vorgesehen sein, um von den Leuchtmitteln stammendes und bevorzugt von den Abschattungselementen umgelenktes Licht in Richtung des Optikelements umzulenken. Die reflektive Platte kann dabei im Bereich der Leuchtmittel Öffnungen aufweisen, in welchen die Leuchtmittel angeordnet sind bzw. durch welche das Licht der Leuchtmittel hindurch abstrahlt. Mittels einer derartigen reflektiven Platte kann eine einfache Reflektionsfläche auf der Leiterplatte bereitgestellt werden, um insgesamt den Wirkungsgrad der Leuchte zu erhöhen. Die reflektive Platte kann dabei teiltransparent oder auch (hoch-)reflektierend ausgebildet sein. Sie ist besonders bevorzugt aus einem (hoch-)reflektierenden Material gebildet.

Gemäß der Erfindung sind die Abschattungselemente jeweils mit einem, vorzugsweise wenigstens mit zwei Stegen mit der Leiterplatte und insbesondere mit der reflektiven Platte verbunden. Mithin erstrecken sich somit bevorzugt vom Randbereich der Öffnungen bzw. Ausnehmungen in der reflektiven Platten die vorbeschriebenen (dünnen) Stege, welche letztlich als Halterung der Abschattungselemente dienen. Aufgrund seiner Anordnung können die Stege ferner als Berührschutz für die Leuchtmittel und ggf. durch die Öffnungen in der reflektiven Platte freigelegte Leiterbahnen auf der Leiterplatte dienen. Dabei können sich die Stege bevorzugt in Form eines Gitters zwischen Leiterplatte oder reflektiver Platte einerseits und dem jeweiligen Abschattungselement andererseits erstrecken. Gemäß der Erfindung sind der oder die Stege integral mit den Abschattungselementen und weiter bevorzugt ferner mit der reflektiven Platte ausgebildet. Auf diese Weise kann eine integral ausgebildete (Vor-)Optik bereitgestellt werden, welche in einfacher Weise mit einer flächigen Leiterplatte verbunden werden kann, wobei dann automatisch die Abschattungselemente zu den jeweiligen Leuchtmitteln fixiert ausgerichtet werden können. Diese Voroptik bzw. auch die reflektive Platte und die Abschattungselemente an sich können bevorzugt als Spritzgussteil beispielsweise aus hoch-reflektierendem Material wie zum Beispiel "ASA white" hergestellt werden. Der abschattende Bereich des Abschattungselements wirkt dann als Rückreflektor und lenkt den in Hauptabstrahlrichtung abgegebenen, unerwünschten Lichtanteil zurück und bevorzugt auch zur Seite hin und bewirkt folglich eine gute Durchmischung des Lichts und damit eine homogen ausgeleuchtete Sekundäroptik (Optikelement, z.B. Optikplatte).

Das bzw. jedes Abschattungselement läuft von dem Optikelement zu dem zugeordneten Leuchtmittel hin spitz zu und weist eine im Wesentlichen kegelförmige Form auf. Die Spitze befindet sich dabei bevorzugt in Hauptabstrahlrichtung direkt vor dem Leuchtmittel. Mittels einer in Hauptabstrahlrichtung auf das Leuchtmittel spitz zulaufenden Ausgestaltung kann es erreicht werden, dass der Lichtanteil in Hauptabstrahlrichtung effektiv seitlich und zurück umgelenkt wird, um einerseits nicht direkt auf das flächige Optikelement zu gelangen und andererseits weiterhin zur Lichtabgabe (beispielsweise über die reflektierend ausgebildete Leiterplatte bzw. die reflektive Platte) bereitgestellt zu werden.

Das Abschattungselement ist gemäß der Erfindung wenigstens auf seiner dem zugeordneten Leuchtmittel zugewandten Fläche teiltransparent ausgebildet. Die Materialstärke des Abschattungselements von einem Bereich in Hauptabstrahlrichtung des jeweiligen Leuchtmittels gesehen direkt vor dem Leuchtmittel (also bevorzugt in Hauptabstrahlrichtung liegend) oder von einem Bereich höchster Leuchtdichte des Leuchtmittels (also bevorzugt in Hauptabstrahlrichtung liegend) aus nimmt mit zunehmendem Abstand quer zur Hauptabstrahlrichtung ab. Auf diese Weise kann auch bei teiltransparenter (Vor)Optik eine möglichst homogene Lichtverteilung direkt bereitgestellt werden, indem eben im Bereich hoher Leuchtdichte eine dickere Materialstärke bereitgestellt wird, und somit das Licht stärker verteil wird und folglich insgesamt eine homogene Ausleuchtung erzielt werden kann.

Das Abschattungselement kann reflektierend und vorzugsweise streuend oder spiegelnd ausgebildet sein. Insbesondere kann das Abschattungselement aus einem reflektierenden und wahlweise ferner streuenden oder spiegelnden Material gebildet sein. Somit kann das durch das Abschattungselement in Hauptabstrahlrichtung nicht zu dem Optikelement durchgelassene Licht des Leuchtmittels homogen verteilt und somit ebenso zur Lichtabgabe und folglich zur Steigerung des Wirkungsgrades der Leuchte eingesetzt werden. Dies insbesondere im Zusammenspiel mit einer reflektierend ausgebildeten oder mit der reflektiven Platte ausgestatteten Leiterplatte.

Das Optikelement kann bevorzugt eine Diffusorfolie oder Diffusorplatte aufweisen, wobei das Optikelement mit zunehmenden Abstand zu den Leuchtmitteln bevorzugt ferner eine mikroprismatische Platte oder Folie, und wahlweise ferner eine transparente Abdeckung aufweist. Somit kann eine mit der Primäroptik bzw. Voroptik (Abschattungselement) zusammenwirkende Sekundäroptik als Optikplatte bereitgestellt werden, um eine besonders homogene Lichtabgabe zu erzielen. Die Leuchte kann somit auch als tuneable white fähige Leuchte eingesetzt werden, da trotz geringer Bauhöhe eine ausreichende Durchmischung des Lichts und homogene Lichtverteilung erzielt werden kann.

Die Leuchtmittel weisen bevorzugt LEDs auf und sind ferner bevorzugt zusammen mit der Leiterplatte als LED-Modul bereitgestellt.

Die Leuchte kann ferner ein Gehäuse aufweisen, mit welchem die Leiterplatte, das Optikelement und die Abschattungselemente in einem wenigstens in Hauptabstrahlrichtung gesehen vordefinierten Abstand zueinander angeordnet sind. Auf diese Weise kann eine definierte Durchmischung und homogene Lichtverteilung erzielt werden. Die Leuchte kann somit sowohl als Einbau als auch als Anbau und insbesondere als (flache) Pendelleuchte bereitgestellt werden.

Gemäß einem weiteren Aspekt betrifft die vorliegende Erfindung ferner eine Leuchte mit einer flächigen Leiterplatte und darauf angeordneten Leuchtmitteln (beispielsweise LEDs). Die Leuchte weist ferner eine Optik, insbesondere eine Voroptik auf. Die (Vor-)Optik weist dabei eine flächige reflektive Platte mit Öffnungen zum Anordnen der Leuchtmittel darin auf. Je Öffnung ist ein direkt vor und beabstandet zu der Öffnung vorgesehenes Abschattungselement zum wenigstens teilweise Abschatten des Lichtes eines der Leuchtmittel der zugeordneten Öffnung in dessen Hauptabstrahlrichtung vorgesehen. Die Abschattungselemente sind erfindungsgemäß mit einem und vorzugsweise wenigstens mit zwei Stegen mit der reflektiven Platte verbunden und mit diesen integral ausgebildet. Die Stege können sich bevorzugt in Form eines Gitters zwischen reflektiver Platte einerseits und jeweiligem Abschattungselement andererseits erstrecken, um somit einen bereits vorbeschriebenen Berührschutz bereitzustellen. Jedes Abschattungselement läuft zu der Öffnung hin spitz zu und weist ferner eine im Wesentlichen kegelförmige Form auf. Die Abschattungselemente sind wie zuvor beschrieben ausgebildet. Die (Vor)Optik kann aus einem teiltransparenten oder reflektierenden und wahlweise ferner streuenden oder spiegelnden Material hergestellt sein. Dies insbesondere bevorzugt in einem Spritzgussverfahren. Als Material ist beispielsweise ein hochreflektives Material, wie z.B. "ASA White", denkbar.

Weitere Ausgestaltung und Vorteile der vorliegenden Erfindung werden anhand der Figuren der begleitenden Zeichnungen im Folgenden beschrieben. Es zeigen:
- Figur 1: eine perspektivische Ansicht eines Ausschnitts einer erfindungsgemäßen Leuchte mit erfindungsgemäßer (Vor)Optik,
- Figur 2: eine Seitenansicht in Pfeilrichtung II eines Teilausschnitts der Leuchte gemäß Figur 1,
- Figur 3: eine weitere Seitenansicht in Pfeilrichtung III der erfindungsgemäßen Leuchte gemäß Figur 1, und
- Figur 4: eine perspektivische Draufsicht auf die erfindungsgemäße (Vor)Optik der erfindungsgemäßen Leuchte gemäß Figur 1 mit Leuchtmitteln.

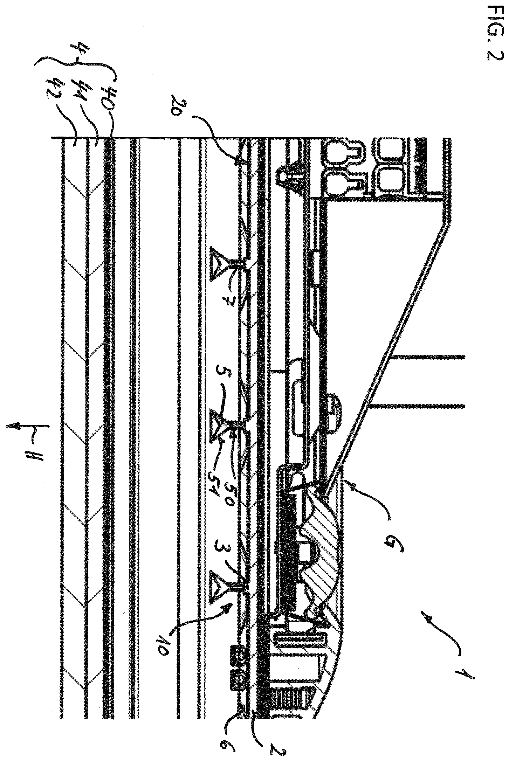

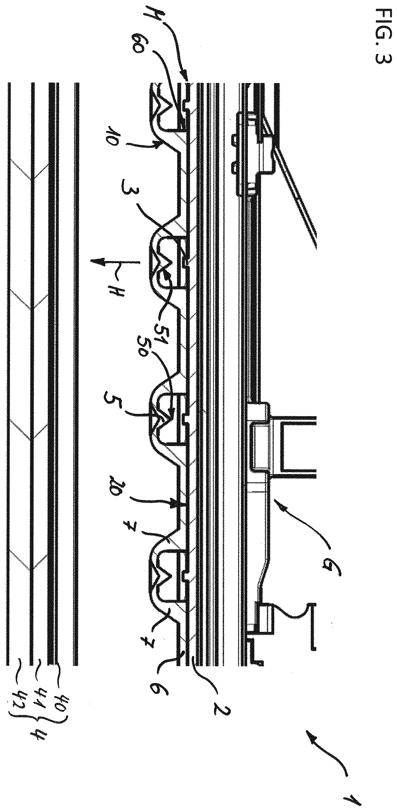

Die Figuren zeigen allesamt ein Ausführungsbeispiel einer erfindungsgemäßen Leuchte 1. Dabei kann es sich, wie insbesondere in den Figuren 2 und 3 zu erkennen ist, um eine Pendelleuchte handeln. Jedoch sind vorliegend auch Anbau- und Einbauleuchten und dergleichen denkbar.

Die erfindungsgemäße Leuchte 1 weist eine flächige Leiterplatte 2 auf. Auf wenigstens einer ihrer flächigen Seiten 20 sind auf der flächigen Leiterplatte 2 Leuchtmittel 3 mit Hauptabstrahlrichtung H angeordnet. Bei den Leuchtmitteln 3 handelt es sich insbesondere um Punktlichtquellen wie LEDs, welche bevorzugt zusammen mit der Leiterplatte 2 ein LED-Modul M bilden.

Die Leuchte 1 weist ferner ein in Hauptabstrahlrichtung H vor der Leiterplatte 2 angeordnetes flächiges Optikelement 4 zur optischen Beeinflussung des von den Leuchtmitteln 3 abgegebenen Lichts auf. Bei dem Optikelement 4 handelt es sich bevorzugt um eine Diffusorfolie oder Diffusorplatte 40. Das Optikelement 4 kann dabei mit zunehmendem Abstand zu den Leuchtmitteln 3 neben der hier dargestellten Diffusorfolie 40 ferner eine mikroprismatische Platte oder Folie 41 sowie wahlweise ferner eine transparente Abdeckung 42 aufweisen. Auch anders aufgebaute Optikelement bzw. Optikplatten zu einer gewünschten optischen Beeinflussung sind denkbar. Eine derartige Kombination von Leiterplatte mit Leuchtmitteln und Optikelement wird mithin auch als Backlit-Anordnung bezeichnet.

Je Leuchtmittel 3 ist ein in Hauptabstrahlrichtung H (direkt) vor dem Leuchtmittel 3 und zwischen Leiterplatte 2 und Optikelement 4 angeordnetes Abschattungselement 5 vorgesehen. Unter "in Hauptabstrahlrichtung H direkt vor" ist im Rahmen der Erfindung unmittelbar in der Hauptabstrahlrichtung H liegend bzw. wenigstens den Bereich in Hauptabstrahlrichtung H liegend quer dazu überdeckend zu verstehen. Das Abschattungselement 5 dient dabei wenigstens teilweise dem Abschatten des Lichts des zugeordneten Leuchtmittels 3 in Hauptabstrahlrichtung H, so dass insbesondere der Kreisbild-erzeugende Teil des Lichts eines Leuchtmittels 3 abgeschattet wird und somit ein Fehler auf dem Optikelement 4 vermieden werden kann. Um den Wirkungsgrad der Leuchte 1 zu steigern, kann das Abschattungselement 5 ferner eine Reflektoroptik aufweisen bzw. als Reflektor ausgebildet sein; und zwar derart, um das in Hauptabstrahlrichtung H abgegebene Licht des zugeordneten Leuchtmittels 3 wenigstens teilweise auf die Leiterplatte 2 (zurück) und ggf. seitlich weg umzulenken. Auf diese Weise kann eine homogene Lichtverteilung insbesondere des Lichtanteils mit hoher Leuchtdichte erzielt werden, so dass insgesamt eine homogenere Lichtverteilung und schließlich Lichtabgabe über das Optikelement erzielt werden kann.

Die den Abschattungselementen 5 bzw. dem Optikelement 4 zugewandte bzw. die die Leuchtmittel 3 aufweisende flächige Seite 20 der Leiterplatte 2 ist bevorzugt reflektierend ausgebildet. Dabei kann diese Seite 20 mit einer reflektierenden Beschichtung versehen sein, um bevorzugt von den Leuchtmitteln 3 stammendes und ferner bevorzugt von dem Abschattungselement 5 als Reflektoroptik umgelenktes Licht in Richtung des Optikelements 4 umzulenken und somit insgesamt den Wirkungsgrad der Leuchte 1 zu erhöhen.

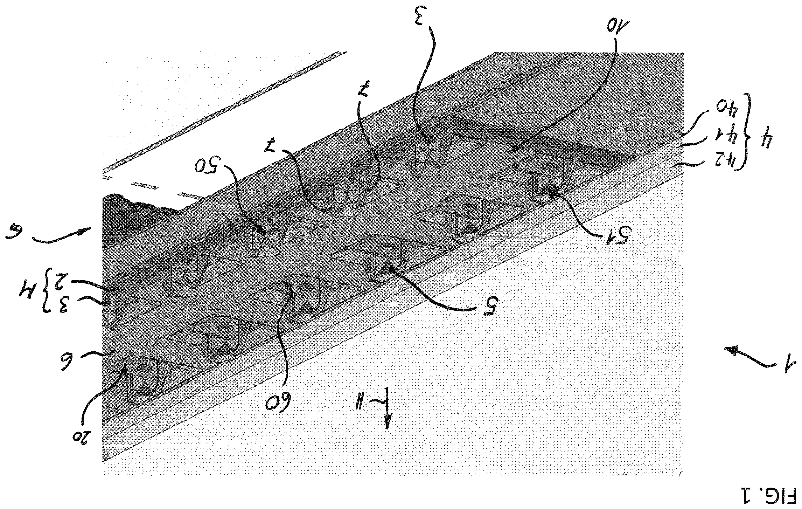

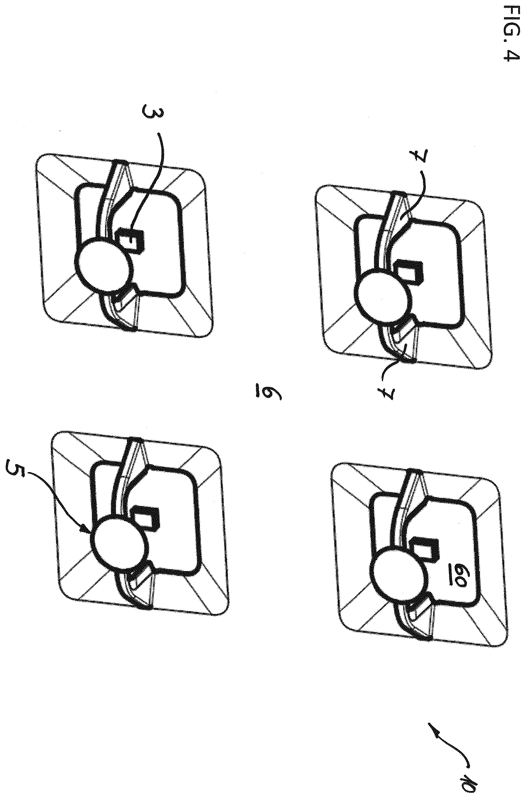

Alternativ oder zusätzlich ist es, wie in den Figuren gezeigt, denkbar, dass auf der die Leuchtmittel 3 aufweisenden flächigen Seite 20 der Leiterplatte 2 eine flächige reflektive Platte 6 vorgesehen ist, um das von den Leuchtmitteln 3 stammende und bevorzugt von dem Abschattungselementen 5 umgelenkte Licht in Richtung des Optikelements 4 umzulenken. Die reflektive Platte 6 weist bevorzugt im Bereich der Leuchtmittel 3 Öffnungen 60 auf, in welchen die Leuchtmittel 3 - wie in den Figuren 1, 3 und 4 zu erkennen ist - angeordnet sind oder durch welche wenigstens das Licht der Leuchtmittel 3 hindurch abstrahlt, um letztlich zu dem Optikelement 4 bzw. den Abschattungselementen 5 zu gelangen. Die reflektive Platte 6 kann dabei teiltransparent oder reflektierend ausgebildet sein und ist bevorzugt aus einem entsprechenden Material - beispielsweise einem reflektierenden Material - gebildet.

Wie den Figuren zu entnehmen ist, sind die Abschattungselemente 5 jeweils mit einem, vorzugsweise wenigstens mit zwei Stegen 7 mit der Leiterplatte 2 - wie dargestellt bevorzugt mit der reflektiven Platte 6 - verbunden. Die Stege 7 sind dabei insbesondere integral mit den jeweiligen Abschattungselementen 5 ausgebildet. In einer besonders bevorzugten und in den Figuren dargestellten Ausführungsform sind die Stege 7 ferner mit der reflektiven Platte 6 integral ausgebildet. Die Stege 7 erstrecken sich bevorzugt in Form eines Gitters zwischen Leiterplatte 2 oder reflektiver Platte 6 einerseits und jeweiligem Abschattungselement 5 andererseits und bilden somit einen sicheren Berührschutz vor Berührung der Leuchtmittel 3 bzw. der durch die Öffnungen 60 freigelegten Bereiche der Leiterplatte (beispielsweise Leiterbahnen).

Die reflektive Platte 6 bildet zusammen mit den Abschattungselementen 5 und wahlweise ferner den Stegen 7 eine (Vor-)Optik 10, welche im Weiteren noch näher beschrieben ist.

Die Abschattungselemente 5 laufen von dem Optikelement 4 aus zu dem zugeordneten Leuchtmittel 3 bzw. der zugeordneten Öffnung 60 hin spitz zu und weisen eine im Wesentlichen kegelförmige Form auf, wie dies den Figuren zu entnehmen ist.

Das Abschattungselement 5 kann gemäß einer Ausführungsform teiltransparent ausgebildet sein. In diesem Fall kann die Materialstärke des Abschattungselements 5 von einem Bereich 50 in Hauptabstrahlrichtung H des jeweiligen Leuchtmittels 3 gesehen direkt vor dem Leuchtmittel 3 oder von einem Bereich 50 höchster Leuchtdichte aus mit zunehmenden Abstand quer zur Hauptabstrahlrichtung H abnehmen. Dies ist beispielsweise deutlich in der Seitenansicht der Figur 3 zu erkennen, wo in dem Bereich 50 die Materialstärke in Hauptabstrahlrichtung H gesehen größer ist als die Materialstärke rechts und links seitlich des Bereichs 50 des Abschattungselements 5. Auf diese Weise kann insbesondere im Bereich hoher Leuchtdichte der Lichtabgabe eine homogene Lichtverteilung erzielt werden, um letztlich Fehler auf dem Optikelement 4 sicher zu vermeiden.

Alternativ (oder zusätzlich) ist es auch denkbar, dass das Abschattungselement 5, wenigstens seine dem zugeordneten Leuchtmittel 3 zugewandte Fläche 51 reflektierend und vorzugsweise streuend oder spiegelnd ausgebildet ist. Bevorzugt ist das Abschattungselement 5 dazu aus einem entsprechenden Material gebildet. Auf diese Weise kann - insbesondere in Kombination mit einer spitz zulaufenden Form des Abschattungselements 5 - eine besonders effektive, homogene Lichtverteilung des von den Leuchtmitteln 3 abgegebenen Lichts auf dem Optikelement 4 erzielt werden. Über das Abschattungselement 5 kann somit nicht nur das Licht höchster Leuchtdichte abgeschattet werden. Dieses kann darüber hinaus auch durch Umlenkung über die in beliebiger Weise reflektierend ausgebildete Leiterplatte 2 (beispielsweise über die reflektive Platte 6) weiter (insbesondere homogen) verteilt werden. Somit kann insgesamt ein hoher Wirkungsgrad der Leuchte 1 erzielt werden. Die erfindungsgemäße Leuchte 1 kann ferner ein Gehäuse G aufweisen, mit welchen die Leiterplatte 3, das Optikelement 4 und auch die Abschattungselemente 5 in einem wenigstens in Hauptabstrahlrichtung H gesehen vordefinierten Abstand zueinander angeordnet werden. Auf diese Weise kann trotz geringer Bauhöhe der Leuchte 1 eine besonders homogene Lichtverteilung ohne Fehler sicher eingestellt werden.

Die vorbeschriebene (Vor-)Optik 10 kann gemäß einem Ausführungsbespiel der Erfindung mit flächiger Leiterplatte 2 und darauf angeordneten Leuchtmitteln 3 ausgebildet sein. Die Primäroptik bzw. (Vor-)Optik 10 weist dabei die vorbeschriebene flächige reflektive Platte 6 mit Öffnungen 60 zum Anordnen der Leuchtmittel 3 darin auf. Je Öffnung 60 weist die (Vor-)Optik ferner ein direkt vor und beabstandet zu der Öffnung 60 vorgesehenes Abschattungselement 5 zum wenigstens teilweise abschatten des Lichts eines Leuchtmittels 3 der zugeordneten Öffnung 60 in Hauptabstrahlrichtung H auf. Wie zuvor bereits beschrieben, können die Abschattungselemente 5 mit der reflektiven Platte 6 mittels der vorbeschriebenen Stege 7 verbunden und bevorzugt integral miteinander ausgebildet sein. Die (Vor)Optik 10 kann dabei aus einem teiltransparenten und/oder reflektierenden und wahlweise ferner streuenden oder spiegelnden Material hergestellt sein. Bevorzugt ist die (Vor-)Optik 10 als ein Teil mittels Spritzgussverfahren hergestellt.

Das Abschattungselement 5 ist dabei gemäß dem zuvor beschriebenen Ausführungsbeispiel ausgebildet. So ist das Abschattungselement 5 wenigstens auf seiner dem zugeordneten Leuchtmittel 3 zugeordneten Fläche 51 teiltransparent ausgebildet. Zudem nimmt die Materialstärke des Abschattungselements 5 von einem Bereich 50 in Hauptabstrahlrichtung H des jeweiligen Leuchtmittels 3 gesehen direkt vor dem Leuchtmittel 3 oder von einem Bereich 50 höchster Leuchtdichte aus mit zunehmenden Abstand quer zur Hauptabstrahlrichtung H ab.

Die vorliegende Erfindung ist auf das vorhergehende Ausführungsbeispiel nicht beschränkt, sofern sie vom Gegenstand der folgenden Ansprüche umfasst ist. Insbesondere ist die Erfindung nicht auf bestimmte Materialien, Abstände und Anzahl an Leuchtmitteln 3 beschränkt. So kann mittels der vorliegenden Erfindung zwar die Anzahl an Leuchtmitteln aufgrund der homogenen Lichtverteilung grundsätzlich reduziert werden. Jedoch ist grundsätzlich eine beliebige Anzahl an Leuchtmitteln (insbesondere LEDs) denkbar, um eine gewünschte Leuchtdichte bzw. homogene Lichtverteilung zu erzielen. Auch die geometrische Ausgestaltung der Stege 7 und des Abschattungselements 5 sowie die Art, Ausgestaltung und Anordnung des Optikelements 4 sind grundsätzlich durch die Erfindung nicht beschränkt.

## Patentansprüche

1. Leuchte (1) aufweisend:
eine flächige Leiterplatte (2) mit auf wenigstens einer ihrer flächigen Seiten (20) angeordneten Leuchtmitteln (3) mit einer Hauptabstrahlrichtung (H),
ein in Hauptabstrahlrichtung (H) vor der Leiterplatte (2) angeordnetes flächiges Optikelement (4) zur optischen Beeinflussung des von den Leuchtmitteln (3) abgegebenen Lichts, und
je Leuchtmittel (3) ein in Hauptabstrahlrichtung (H) vor dem Leuchtmittel (3) und zwischen Leiterplatte (2) und Optikelement (4) angeordnetes Abschattungselement (5) zum wenigstens teilweise Abschatten des Lichtes des zugeordneten Leuchtmittels (3) in Hauptabstrahlrichtung (H),
wobei die Abschattungselemente (5) jeweils mit wenigstens einem Steg (7) mit der Leiterplatte (2) verbunden sind,
**dadurch gekennzeichnet, dass** das Abschattungselement (5) wenigstens auf seiner dem zugeordneten Leuchtmittel (3) zugewandten Fläche (51) teiltransparent ausgebildet ist,
wobei die Materialstärke des Abschattungselements (5) von einem Bereich (50) in Hauptabstrahlrichtung (H) des jeweiligen Leuchtmittels (3) gesehen direkt vor dem Leuchtmittel (3) oder von einem Bereich höchster Leuchtdichte (50) aus mit zunehmendem Abstand quer zur Hauptabstrahlrichtung (H) abnimmt, und
wobei jedes Abschattungselement (5) von dem Optikelement (4) zu dem zugeordneten Leuchtmittel (3) hin spitz zuläuft und eine im Wesentlichen kegelförmige Form aufweist, und
wobei die Stege (7) jeweils integral mit dem jeweiligen Abschattungselement (5) ausgebildeten sind.

2. Leuchte (1) nach Anspruch 1, wobei das Abschattungselement (5) eine Reflektoroptik aufweist, welche derart ausgebildet und angeordnet ist, um das in Hauptabstrahlrichtung (H) abgegebene Licht des zugeordneten Leuchtmittels (3) wenigstens teilweise auf die Leiterplatte (2) umzulenken.

3. Leuchte (1) nach Anspruch 1 oder 2, wobei die den Abschattungselementen (5) oder dem Optikelement (4) zugewandte oder die die Leuchtmittel (3) aufweisende flächige Seite (20) der Leiterplatte (2) reflektierend ausgebildet ist.

4. Leuchte (1) nach einem der vorhergehenden Ansprüche, wobei die die Leuchtmittel (3) aufweisende flächige Seite (20) mit einer reflektierenden Beschichtung versehen ist, um von den Leuchtmittel (3) stammendes Licht in Richtung des Optikelements (4) umzulenken.

5. Leuchte (1) nach einem der vorhergehenden Ansprüche, wobei auf der die Leuchtmittel (3) aufweisenden flächigen Seite (20) eine flächige reflektive Platte (6) vorgesehen ist, um von den Leuchtmittel (3) stammendes Licht in Richtung des Optikelements (4) umzulenken, wobei die reflektive Platte (6) bevorzugt im Bereich der Leuchtmittel (3) Öffnungen (60) aufweist, in welchen die Leuchtmittel (3) angeordnet sind oder durch welche das Licht der Leuchtmittel (3) hindurch abstrahlt,
wobei vorzugsweise die reflektive Platte (6) teiltransparent ausgebildet ist, oder wobei vorzugsweise die reflektive Platte (6) reflektierend ausgebildet ist, ferner vorzugsweise aus einem reflektierenden Material gebildet ist.

6. Leuchte (1) nach Anspruch 5, wobei die Abschattungselemente (5) mit dem jeweiligen wenigstens einen Steg (7) mit der reflektiven Platte (6) verbunden sind,
wobei vorzugsweise die Stege (7) jeweils integral mit der reflektiven Platte (6) ausgebildet sind, und/oder
wobei sich vorzugsweise die Stege (7) in Form eines Gitters zwischen Leiterplatte (2) oder reflektiver Platte (6) einerseits und jeweiligem Abschattungselement (5) andererseits erstrecken.

7. Leuchte (1) nach einem der vorhergehenden Ansprüche, wobei das Optikelement (4) eine Diffusorfolie oder Diffusorplatte (40) aufweist, wobei das Optikelement (4) mit zunehmendem Abstand zu den Leuchtmitteln (3) bevorzugt ferner eine mikroprismatische Platte oder Folie (41), und wahlweise ferner eine transparente Abdeckung (42) aufweist.

8. Leuchte (1) nach einem der vorhergehenden Ansprüche, wobei die Leuchtmittel (3) LEDs aufweisen, bevorzugt zusammen mit der Leiterplatte (2) ein LED-Modul (M) bilden.

9. Leuchte (1) nach einem der vorhergehenden Ansprüche, ferner aufweisend ein Gehäuse (G), mit welchem die Leiterplatte (2), das Optikelement (4) und die Abschattungselemente (5) in einem wenigstens in Hauptabstrahlrichtung (H) gesehen vordefinierten Abstand zueinander angeordnet sind.

10. Leuchte (1), aufweisend:
eine flächige Leiterplatte (2) und darauf angeordnete Leuchtmittel (3), und
eine Optik (10), insbesondere eine Voroptik, aufweisend:
eine flächige reflektive Platte (6) mit Öffnungen (60) zum Anordnen der Leuchtmittel (3),
je Öffnung (60) ein direkt vor und beabstandet zu der Öffnung (60) vorgesehenes Abschattungselement (5) zum wenigstens teilweise Abschatten des Lichtes eines Leuchtmittels (3) der zugeordneten Öffnung (60) in Hauptabstrahlrichtung (H),
wobei jedes Abschattungselement (5) wenigstens auf seiner dem zugeordneten Leuchtmittel (3) zugewandten Fläche (51) teiltransparent ausgebildet ist,
wobei die Materialstärke jedes Abschattungselements (5) von einem Bereich (50) in Hauptabstrahlrichtung (H) des jeweiligen Leuchtmittels (3) gesehen direkt vor dem Leuchtmittel (3) oder von einem Bereich höchster Leuchtdichte (50) aus mit zunehmendem Abstand quer zur Hauptabstrahlrichtung (H) abnimmt,
wobei jedes Abschattungselement (5) zu der Öffnung (60) hin spitz zuläuft und eine im Wesentlichen kegelförmige Form aufweist,
wobei jedes Abschattungselement (5) mit wenigstens einem Steg (7) mit der reflektiven Platte (6) verbunden ist, und
wobei die Stege (7) integral mit dem jeweiligen Abschattungselement (5) und der reflektiven Platte (6) ausgebildeten sind.

11. Leuchte (1) nach Anspruch 10, wobei sich die Stege (7) ferner in Form eines Gitters zwischen reflektiver Platte (6) einerseits und jeweiligem Abschattungselement (5) andererseits erstrecken.

12. Leuchte (1) nach Anspruch 10 oder 11, wobei die Optik (10) aus einem teiltransparenten oder reflektierenden und wahlweise ferner streuenden oder spiegelnden Material hergestellt ist.

## Claims

1. A lamp (1) comprising:
a laminar printed circuit board (2) having lighting means (3) arranged on at least one of its laminar sides (20) with a main radiating direction (H),
a laminar optical element (4) arranged in the main radiating direction (H) in front of the printed circuit board (2) for optically influencing the light emitted by the lighting means (3), and
for each lighting means (3), a shading element (5) arranged in the main radiating direction (H) in front of the lighting means (3) and between the printed circuit board (2) and the optical element (4) for at least partially shading the light of the associated lighting means (3) in the main radiating direction (H),
wherein the shading elements (5) are each connected to the printed circuit board (2) with at least one web (7), **characterized in that**
the shading element (5) is at least partially transparent on its surface (51) facing the associated lighting means (3),
wherein the material thickness of the shading element (5) decreases with increasing distance transverse to the main radiating direction (H) from a region (50) that is, when viewed in the main radiating direction (H) of the respective lighting means (3), directly in front of the lighting means (3) or from a region of the highest luminance (50), and
wherein each shading element (5) tapers from the optical element (4) towards the associated lighting means (3) and has a substantially tapered shape, and
wherein the webs (7) are each integrally formed with the respective shading element (5).

2. The lamp (1) according to claim 1, wherein the shading element (5) comprises a reflector optics, which is configured and arranged so as to at least partially deflect the light of the associated lighting means (3) emitted in the main radiating direction (H) onto the printed circuit board (2).

3. The lamp (1) according to claim 1 or 2, wherein the surface (20) of the printed circuit board (2) facing the shading elements (5) or the optical element (4) or the surface (20) of the lighting means (3) is configured so as to be reflective.

4. The lamp (1) according to any one of the preceding claims, wherein the laminar side (20) comprising the lighting means (3) is equipped with a reflective coating for diverting light originating from the lighting means (3) towards the optical element (4).

5. The lamp (1) according to any one of the preceding claims, wherein, on the laminar side (20) comprising the lighting means (3), a laminar reflective panel (6) is provided for diverting light originating from the lighting means (3) in the direction of the optical element (4), wherein the reflective panel (6) preferably comprises apertures (60) in the region of the lighting means (3) in which the lighting means (3) are arranged or through which the light of the lighting means (3) radiates,
wherein preferably the reflective panel (6) is formed so as to be partially transparent, or wherein preferably the reflective panel (6) is formed so as to be reflective, further preferably formed from a reflective material.

6. The lamp (1) according to claim 5, wherein the shading elements (5) are connected with the respective at least one web (7) to the reflective panel (6),
wherein preferably the webs (7) are each integrally formed with the reflective plate (6), and/or
wherein preferably the webs (7) extend in the form of a grid between the printed circuit board (2) or the reflective plate (6) on the one hand and the respective shading element (5) on the other hand.

7. The lamp (1) according to any one of the preceding claims, wherein the optical element (4) comprises a diffuser foil or diffuser plate (40), wherein preferably the optical element (4) further comprises a microprismatic plate or film (41) with increasing distance to the lighting means (3), and optionally further comprises a transparent cover (42).

8. The lamp (1) according to any one of the preceding claims, wherein the lighting means (3) comprises LEDs, [which] preferably together with the printed circuit board (2) form an LED module (M).

9. The lamp (1) according to any one of the preceding claims, further comprising a housing (G) with which the printed circuit board (2), the optical element (4), and the shading elements (5) are arranged at a predefined distance to one another, when viewed at least in the main radiating direction (H) .

10. A lamp (1), comprising:
a laminar printed circuit board (2) and lighting means (3) disposed thereon, and
an optic (10), in particular a pre-optic, comprising:
a laminar reflective plate (6) having apertures (60) for arranging the lighting means (3),
for each opening (60), a shading element (5) provided directly in front of and spaced apart from the opening (60) for at least partially shading the light of a lighting means (3) of the associated opening (60) in the main radiating direction (H),
wherein each shading element (5) is configured so as to be at least partially transparent on its surface (51) facing the associated lighting means (3),
wherein the material thickness of each shading element (5) decreases with increasing distance transversely to the main radiating direction (H) from a region (50) that is, when viewed in the main radiating direction (H) of the respective lighting means (3), directly in front of the lighting means (3) or from a region of the highest luminance (50),
wherein each shading element (5) tapers towards the opening (60) and has a substantially tapered shape,
wherein each shading element (5) is connected with at least one web (7) to the reflective panel (6), and
wherein the webs (7) are integrally formed with the respective shading element (5) and the reflective panel (6).

11. The lamp (1) according to claim 10, wherein the webs (7) further extend in the form of a grid between the reflective panel (6) on the one hand and the respective shading element (5) on the other hand.

12. The lamp (1) according to claim 10 or 11, wherein the optics (10) is made of a partially transparent or reflective and optionally further scattering or reflective material.

## Revendications

1. Luminaire (1) présentant :
une carte de circuit imprimé (2) étendue dotée de moyens d'éclairage (3) disposés sur au moins une de ses faces étendues (20) et présentant une direction principale de rayonnement (H),
un élément optique (4) étendu disposé dans la direction principale de rayonnement (H) devant la carte de circuit imprimé (2) afin d'exercer une influence optique sur la lumière rayonnée par les moyens d'éclairage (3), et
pour chaque moyen d'éclairage (3), un élément d'occultation (5) disposé dans la direction principale de rayonnement (H) devant le moyen d'éclairage (3) et entre la carte de circuit imprimé (2) et l'élément optique (4) afin d'occulter au moins partiellement la lumière du moyen d'éclairage (3) qui lui est associé, dans la direction principale de rayonnement (H),
lesdits éléments d'occultation (5) étant chacun raccordés à la carte de circuit imprimé (2) par au moins une nervure (7),
**caractérisé en ce que**
l'élément d'occultation (5) est partiellement transparent au moins sur sa surface (51) tournée vers le moyen d'éclairage (3) qui lui est associé,
l'épaisseur du matériau dudit élément d'occultation (5) allant en diminuant à partir d'une zone (50) directement devant ledit moyen d'éclairage (3), vu dans la direction principale de rayonnement (H) du moyen d'éclairage (3) respectif, ou allant en diminuant avec la distance transversalement à la direction principale de rayonnement (H) à partir d'une zone de densité lumineuse maximale (50), et
chaque élément d'occultation (5) allant en pointe, de l'élément optique (4) vers le moyen d'éclairage (3) associé et présentant une forme sensiblement conique, et
lesdites nervures (7) étant chacune conçues d'un seul tenant avec l'élément d'occultation (5) respectif.

2. Luminaire (1) selon la revendication 1, dans lequel l'élément d'occultation (5) présente une optique de réflexion conçue et agencée pour dévier au moins partiellement, vers la carte de circuit imprimé (2), la lumière du moyen d'éclairage (3) associé qui est rayonnée dans la direction principale de rayonnement (H).

3. Luminaire (1) selon la revendication 1 ou 2, dans lequel la face étendue (20) de la carte de circuit imprimé (2) qui est tournée vers les éléments d'occultation (5) ou vers l'élément optique (4) ou qui présente les moyens d'éclairage (3) est conçue de manière réfléchissante.

4. Luminaire (1) selon l'une des revendications précédentes, dans lequel la face étendue (20) présentant les moyens d'éclairage (3) est pourvue d'un revêtement réfléchissant servant à dévier la lumière issue des moyens d'éclairage (3) en direction de l'élément optique (4).

5. Luminaire (1) selon l'une des revendications précédentes, dans lequel une plaque réfléchissante (6) étendue est prévue sur la face étendue (20) présentant les moyens d'éclairage (3) afin de dévier la lumière issue des moyens d'éclairage (3) en direction de l'élément optique (4), ladite plaque réfléchissante (6) présentant de préférence des ouvertures (60), à proximité des moyens d'éclairage (3), dans lesquelles sont disposés les moyens d'éclairage (3) ou à travers lesquelles est rayonnée la lumière des moyens d'éclairage (3),
ladite plaque réfléchissante (6) étant de préférence partiellement transparente, ou bien ladite plaque réfléchissante (6) étant de préférence réfléchissante et étant en outre de préférence conçue dans un matériau réfléchissant.

6. Luminaire (1) selon la revendication 5, dans lequel les éléments d'occultation (5) sont raccordés à la plaque réfléchissante (6) par au moins une nervure (7),
lesdites nervures (7) étant conçues de préférence d'un seul tenant avec la plaque réfléchissante (6), et/ou
lesdites nervures (7) s'étendant de préférence sous la forme d'un réseau entre la carte de circuit imprimé (2) ou la plaque réfléchissante (6) d'un côté et l'élément d'occultation (5) respectif de l'autre.

7. Luminaire (1) selon l'une des revendications précédentes, dans lequel l'élément optique (4) présente une feuille ou plaque de diffusion (40), ledit élément optique (4) présentant de préférence en outre, plus à l'écart des moyens d'éclairage (3), une plaque ou feuille microprismatique (41), et éventuellement en outre un capot (42) transparent.

8. Luminaire (1) selon l'une des revendications précédentes, dans lequel les moyens d'éclairage (3) présentent des LED et forment, de préférence conjointement avec la carte de circuit imprimé (2), un module à LED (M).

9. Luminaire (1) selon l'une des revendications précédentes, présentant en outre un boîtier (G) avec lequel la carte de circuit imprimé (2), l'élément optique (4) et les éléments d'occultation (5) sont agencés les uns par rapport aux autres selon un écart prédéfini au moins dans la direction principale de rayonnement (H).

10. Luminaire (1), présentant :
une carte de circuit imprimé (2) étendue et des moyens d'éclairage (3) disposés sur celle-ci, et
une optique (10), notamment une optique avant, présentant :
une plaque réfléchissante (6) étendue dotée d'ouvertures (60) destinée à la disposition des moyens d'éclairage (3),
pour chaque ouverture (60), un élément d'occultation (5) prévu directement devant l'ouverture (60) et à distance de celle-ci pour occulter au moins partiellement la lumière d'un moyen d'éclairage (3) de l'ouverture (60) qui lui est associée, dans la direction principale de rayonnement (H),
chaque élément d'occultation (5) étant partiellement transparent au moins sur sa surface (51) tournée vers le moyen d'éclairage (3) qui lui est associé,
l'épaisseur du matériau de chaque élément d'occultation (5) allant en diminuant à partir d'une zone (50) directement devant ledit moyen d'éclairage (3), vu dans la direction principale de rayonnement (H) du moyen d'éclairage (3) respectif, ou allant en diminuant avec la distance transversalement à la direction principale de rayonnement (H) à partir d'une zone de densité lumineuse maximale (50),
chaque élément d'occultation (5) allant en pointe vers l'ouverture (60) et présentant une forme sensiblement conique,
chaque élément d'occultation (5) étant raccordé à la plaque réfléchissante (6) par au moins une nervure (7), et
lesdites nervures (7) étant conçues d'un seul tenant avec l'élément d'occultation (5) respectif et la plaque réfléchissante (6).

11. Luminaire (1) selon la revendication 10, dans lequel les nervures (7) s'étendent en outre sous la forme d'un réseau entre la plaque réfléchissante (6) d'un côté et l'élément d'occultation (5) respectif de l'autre.

12. Luminaire (1) selon la revendication 10 ou 11, dans lequel l'optique (10) est réalisée dans un matériau partiellement transparent ou réfléchissant et offrant éventuellement en outre un effet de diffusion ou de miroitement.
